# EUROPEAN PATENT SPECIFICATION

(11) **EP 4 054 822 B1**
(45) Date of publication and mention of the grant of the patent: **23.10.2024**
(21) Application number: 20761786.1
(22) Date of filing: 21.08.2020
(51) Int. Cl.: B29C 45/14, B29C 45/04

(54) **DEVICE AND METHOD FOR MANUFACTURING COMPOSITE PRODUCTS WITH AN INJECTION-MOLDED FEATURE**
VORRICHTUNG UND VERFAHREN ZUM HERSTELLEN VON VERBUNDPRODUKTEN MIT EINEM SPRITZGUSSMERKMAL
DISPOSITIF ET PROCÉDÉ DE FABRICATION DE PRODUITS COMPOSITES PRÉSENTANT UN ÉLÉMENT MOULÉ PAR INJECTION

(30) Priority: 05.11.2019 CH 13952019
(43) Date of publication of application: 14.09.2022
(73) Proprietor: Foboha (Germany) GmbH, 77716 Haslach (DE)
(72) Inventor: ARMBRUSTER, Rainer, 77709 Wolfach (DE)
(74) Representative: Rentsch Partner AG
(86) International application number: PCT/EP2020/073576
(87) International publication number: WO 2021/089213

(56) References cited:
- EP-A1- 0 862 980
- WO-A2-2009/086501
- US-A1- 2019 291 317

## Description

### FIELD OF THE INVENTION

The present invention lies in the field of devices for injection molding, namely of composite products comprising a combination of a blank and an injection-molded plastic component.

### BACKGROUND OF THE INVENTION

From the prior art devices for injection molding of products comprising a combination of a blank and an injection-molded plastic component, are known which comprise a first mold half and a second mold half being displaceable relative to the first mold half in a first direction. In a closed position of the injection molding the first mold half interacts with the second mold half in a separation plane forming at least one cavity suitable to receive liquefied plastic material. Further, at least one cavity is formed by a core and a recess which are operatively associated to receive liquefied plastic material to form a plastic component interconnected to the blank. The flat blank is at least partially formed into a container by the mold halves when moving from an open to a closed position. After injection of the liquefied plastic material and opening of the injection molding device the finished composite is removed.

WO09086501A2 was first published in July 2009 on behalf of Graphic Packaging Int. Inc. It concerns a tool for forming a container. The tool comprises a cavity operable to receive a blank. The cavity having at least one sidewall for forming at least one sidewall of the container and at least one flange wall for forming at least one flange of the container. A core operatively connected to the cavity, the core operable to enter the cavity to at least partially form the blank into the container. An injection cavity at least partially formed from the cavity and the core, the injection cavity being for receiving liquid resin and directing liquid resin around at least a portion of the perimeter of the blank. The injection cavity comprising an advanced-flow section and a delayed-flow section. The advanced-flow section having a greater cross- sectional area than the delayed-flow section. The advanced-flow section being located adjacent the at least one sidewall of the cavity and the delayed-flow section extending outwardly from the advanced- flow section beyond the flange wall.

WO12114270A1 was first published in August 2012 on behalf of Delight Packaging OY. It concerns a package comprising a cardboard blank being shaped as a container with a bottom and one or more cardboard sidewalls extending upwardly from the bottom. The package further comprising a moulded rim being attached to said one or more cardboard sidewalls, along an interface formed of an upper portion of said one or more cardboard sidewalls and a lower portion of said moulded rim and extending along at least a part of an upper edge of said one or more cardboard sidewalls. The rim is extending essentially upright upwardly from said one or more cardboard sidewalls thereby providing the package with a moulded upper sidewall portion.

WO13148237A1 was first published in October 2013 on behalf of Graphic Packaging Int. Inc. It is directed to a composite construct comprising a side wall extending at least partially around an interior of the composite construct. At least a portion of the side wall comprises at least one laminate, and the at least one laminate comprises at least one layer of material that comprises a first renewable polymer. The composite construct can also comprise at least one injection-molded element comprising at least a second renewable polymer.

CN105314204A was first published in February 2016 on behalf of Shanghai Zidan Food Packaging Printing Co. Ltd. It is directed to a paper-plastic-combined molded packaging box. The packaging box is formed by paperboards and injection-molded plastic pieces. The lateral sides and a bottom board of the packaging box are defined by the paperboards, and the injection-molded plastic pieces are arranged at the corners and connected with the paperboards on the two sides and the bottoms of the plastic pieces in a matched mode.

US2019291317A1 first published in September 2019 in the name of the same applicant relates to an injection molding device comprising an injection mold with a middle mold part arranged in a first direction between a first outer mold part and a second outer mold part. The first outer mold part and the second outer mold part are linearly movable with respect to the middle mold part in the first direction between an open position and a closed position of the injection mold. The middle mold part is turnable about a rotation axis and comprises a side face which comprises a first cavity suitable to temporarily receive a first component. The first cavity communicates with a first half of a second cavity. At least one of the outer mold parts comprises a second half of the second cavity which interacts with the first half to form the second cavity to receive a liquefied first plastic material to form a second component interconnected to the first component.

### SUMMARY OF THE INVENTION

Injection molding devices known from the prior art have limited capabilities to be used in parallel production of composite products comprising a combination of a blank and an injection-molded plastic component. This becomes especially relevant for mass production of such composite products. A further disadvantage is undesired lateral laminar over-molding into cavity areas intended for the blank only.

The present invention addresses the problem of providing an injection molding device that enables efficient and precise production of composite products comprising a combination of a blank, preferably made from cardboard, paper or similar material, and an injection-molded plastic component. Depending on the field of application, both materials are preferably compostable.

A first aspect of the invention relates to an injection molding device, for manufacturing of composite products comprising a combination of a blank and an injection-molded plastic component. The injection molding device comprises a first outer mold half comprising a first outer side face and a second outer mold half which is arranged displaceable with respect to the first outer mold half in a first direction between an open position and a closed position and comprising a second outer side face. A center block is arranged, with respect to the first direction, between the first and the second outer mold half and in the open position of the injection molding device and being rotatable around a center axis arranged perpendicular with respect to the first direction. The center block comprising at least one pair of center block side faces each carrying an inner mold half interacting in a closed position of the injection molding device in a first separation plane with the first outer mold half, respectively in a second separation plane with the second outer mold half forming in the closed position at least one first cavity and at least one second cavity. At least one of the first and/or the second cavity comprises at least one clamping means to clamp at least one blank, and in the closed position of the injection molding device forming at least one compartment to receive liquefied plastic material to form a plastic component interconnecting to the blank along at least one pair of adjacent edges. Usually the side faces of the center block are equally spaced apart by 90° with respect to each other in circumferential direction with respect to the center axis. In the closed position of the injection molding device the at least one first cavity and/or the least one second cavity are formed by a convex core and an operatively associated concave recess.

In accordance with the invention as claimed in the appended set of claims and depending on the design and the product to be manufactured, on the one hand at least one concave recess is arranged on a side face of the center block and a thereto operatively associated convex core is arranged on a side face of at least one outer mold half. If appropriate at least one concave recess is arranged on each side face of at least one pair of side faces of the center block and at least one corresponding convex core is arranged on the first and/ or the second outer mold half, or on the other hand at least one convex core is arranged on a side face of the center block and a thereto operatively associate concave recess is arranged on a side face of at least one outer mold half. If appropriate at least one convex core is arranged on each side face of at least one pair of side faces of the center block and at least one corresponding concave recess is arranged on the first and/ or the second outer mold half.

The clamping means to hold the blank during production of the injection-molded plastic component in the closed position is preferably formed at least partially between the convex core and the concave recess by at least one protrusion arranged on the convex core and/or the concave recess in the closed position forming a thin area which corresponds to the thickness of the blank. The clamping means helps to temporarily clamp the blank between the convex core and the concave recess. The protrusion presses the blank between the convex core and the concave recess.

Preferably the at least one protrusion is arranged circumferential on the convex core and/or the concave recess delimiting the at least one compartment for the liquefied plastic material. Usually the protrusion is preventing undesired lateral over molding. Through increased pressure on regions of the blank adjacent to the at least one compartment it reduces the likelihood of injecting liquefied plastic material into cavity areas intended for the blank only. If appropriate, the convex core and/ or the concave recess may comprise additional holding means to temporarily hold the blank at the thereto related side face of center block during rotation. Preferably the holding means are formed as a suction means and/or clamping means and/or friction means.

Depending on the design and the product to be manufactured the at least one compartment has a cage-like structure extending along the at least one pair of adjacent edges of the blank. The cage-like structure may comprise at least two elongated sections interconnected to each other. The cage-like structure further may be open or closed, wherein an open cage-like structure comprises at least one elongated section with at least one end region not being interconnected to a further section of the structure. In other words, in an open cage-like structure may comprise non-continuous elongated sections.

Typically, a handling device is arranged laterally to the injection molding device (next to the 180° and/ or 0° position). The handling device loads the at least one blank into the concave recess or onto the convex core. Preferably the handling device loads at least one preformed blank into the concave recess or onto the convex core. This is advantageous as the space needed by a preformed or folded blank, in a cross section parallel to a side face of the center clock at the 180° and/ or 0° position, is significantly reduced.

Depending on the shape of the composite product and the method of manufacturing it may be may be advantageous to use ejection means to eject the composite products from the inner molds. These ejection means are preferably formed as pushing means, either as a rod-shaped pusher or as air holes through which a pressure can be applied to the composite products to remove them from the respective mold half.

Usually the first and the second outer mold halves may comprise sprue channels to transport the liquefied plastic material to at least one injection point. Preferably the at least one cavity comprises at least one injection point, in particular two or more injection points, by means of said injection point liquefied plastic material is injected into the at least one compartment of the cavity. This may be advantageous to provide an optimal distribution of liquefied plastic material during the injection into the at least one compartment of the first and/ or the second cavity.

A second aspect of the invention relates to a composite product comprising a blank with at least one pair of adjacent edges and a plastic component forming a cage-like structure along the at least one pair of adjacent edges. Depending on the design of the composite product the blank comprises one or more interconnected segments of sheet material. The sheet material may be of varying or uniform thickness and can be composed of one or more layers. The sheet material may be cardboard, paper, plastic, or other cellulose-based materials etc.

The cage-like structure acts as a support structure for the composite product and provides rigidity for the composite product. In variations the cage-like structure comprises rips arranged on the inside of the composite product adjacent to the sheet material of the blank.

In variations a lid is interconnected to the cage-like structure via a film hinge and typically the cage-like structure and/or the lid comprises at least one an injection mark. The injection mark may be the injection mark of a sprue channel.

In order to provide the blank of the composite product in a preformed or folded state for the manufacturing process at least one pair of adjacent edges of the blank are interconnected to each other by an auxiliary flap. The auxiliary flap may be attached to the surface of at least one of the adjacent edges by adhesive means or by a form fit.Depending on the field of application the cage-like structure and/ or the blank may be made from a bio-degradable material like bio-degradable plastics or the like.

A third aspect of the invention relates to a method for manufacturing composite products comprising a combination of a blank and an injection-molded plastic component. The method comprises the following steps:Providing an injection molding device comprising:
i. a first outer mold half comprising a first outer side face and a second outer mold half which is arranged displaceable with respect to the first outer mold half in a first direction between an open position and a closed position and comprising a second outer side face; and
ii. a center block arranged, with respect to the first direction, between the first and the second outer mold half and in the open position of the injection molding device being rotatable around a center axis arranged perpendicular with respect to the first direction;
iii. the center block comprising at least one pair of center block side faces each carrying an inner mold half interacting in a closed position of the injection molding device in a first separation plane with the first outer mold half, respectively in a second separation plane with the second outer mold half forming in the closed position at least one first cavity and at least one second cavity;
iv. at least one of the first and/or the second cavity comprising at least one clamping means to clamp at least one blank, and in the closed position of the injection molding device forming at least one compartment to receive liquefied plastic material to form a plastic component interconnecting to the blank along at least one pair of adjacent edges; and
v. in the closed position of the injection molding device the at least one first cavity and/or the least one second cavity is formed by a convex core and an operatively associated concave recess;

b. loading a blank onto the convex core or into the concave recess.
c. rotating the center block by 90°;
d. closing the injection molding device;
e. injecting liquefied plastic material into the at least one compartment;
f. opening the injection molding device;
g. rotating the center block by 90°; and
h. removing the composite product comprising a combination of a blank and an injection-molded plastic component.

Advantageously for efficient production of composite products the blank is provided in a preformed or folded state, essentially in the shape of the composite product. A preformed blank is advantageous as multiple preformed blanks can be loaded into the injection molding device simultaneously with minimized space between the concave recesses and/ or the convex cores on the at least one pair of side faces of the center block onto/ into which the blanks are loaded. In other words, the arrangement of the cavity-forming concave recesses and/ or convex cores on the at least one pair of side faces of the center block may be denser resulting in a smaller overall size of the injection molding device. This is in comparison to an injection molding device into which blanks are loaded in an unfolded and essentially flat state.

If applicable the preformed or folded state the blank is prepared by interconnecting at least one pair of adjacent edges to each other by an auxiliary flap.

In the closed position the blank preferably is temporarily clamped between the convex core and the concave recess by clamping means of the cavity of the injection molding device. The clamping means being formed between the convex core and the concave recess by at least one protrusion arranged on the convex core and/or the concave recess in the closed position. By clamping the blank with the clamping means its position is secured during the injection of the liquefied plastic material into the at least one compartment of the cavity.

Alternatively, or in addition, the blank can be folded into the folded state while it is loaded into the concave recess. Good performance is possible, when the blank is pushed into the concave recess by means of the convex core. However, in some variations the blank can be pushed into the concave recess by means of a folding device arranged laterally adjacent the injection molding device. The folding device therefore usually comprises a folding means displaceable perpendicular to the first direction.

Holding means of the convex core and/ or the concave recess may temporarily hold the blank at the thereto related side face of center block during rotation. This ensures a precise positioning of the blank in the cavity in a closed position of the injection molding device. Liquefied plastic material may be injected by means of at least one sprue channel into the at least one compartment of the cavity in order to form the injection-molded plastic component of the composite product, leaving at least one injection mark of a sprue channel. Wherein at least one pair of adjacent edges of the blank are at least partially embedded in plastic material during injection.

It is to be understood that both the foregoing general description and the following detailed description present embodiments, and are intended to provide an overview or framework for understanding the nature and character of the disposition. The accompanying drawings are included to provide a further understanding, and are incorporated into and constitute a part of this specification. The drawings illustrate various embodiments, and together with the description serve to explain the principles and operation of the concepts disclosed.

### BRIEF DESCRIPTION OF THE DRAWINGS

The herein described invention will be more fully understood from the detailed description given herein below and the accompanying drawings which should not be considered limiting to the invention described in the appended claims. The drawings are showing:
- Fig. 1: A composite product comprising a combination of a blank and an injection-molded plastic component with a cutout section;
- Fig. 2: The injection-molded plastic component of the composite product shown in Fig. 1;
- Fig. 3: The preformed blank of the composite product shown in Fig. 1;
- Fig. 4: An injection mold according to the invention in a perspective manner;
- Fig. 5: An injection mold according to the invention in a perspective manner;
- Fig. 6: A top view of an injection molding device according to Fig. 6 in a closed position;
- Fig. 7: A sectional view of the injection molding device from Fig. 7;
- Fig. 8: A detailed view of Fig. 8.

### DESCRIPTION OF THE EMBODIMENTS

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that this disclosure will satisfy applicable legal requirements. Whenever possible, like reference numbers will be used to refer to like components or parts.

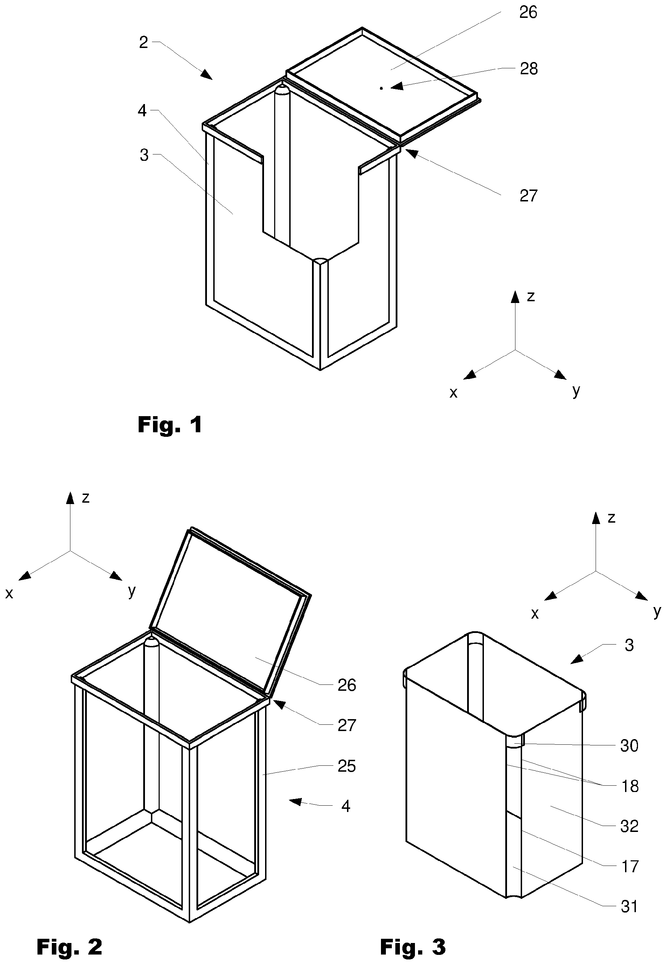

**Figure 1** shows the composite product 1 formed as a container in a perspective view. The composite product comprises a combination of a blank 3 and an injection molded plastic component 4. The composite product further comprises a lid 26 interconnected to the plastic component 4 via a film hinge 27. The lid 26 comprises one an injection mark 28 of a sprue channel arranged on the inside in a closed state of the container.

**Figure 2** shows in a perspective view the plastic component 4 forming a cage-like structure 25 of the composite product 2 of **Figure 1****.** Interconnected via a film hinge 27 is a lid 26, also made from plastic material. The cage-like structure is closed as all end regions of all elongated sections are interconnected to a further section in this embodiment forming rectangular corners and no non-continuous sections are present.

**Figure 3** shows in a perspective view the blank 3 of the composite product 2 of **Figure 1****.** The blank 3 comprises a base segment 31 and four side segments 32 interconnected to the base segment 31 and extending upward therefrom. The pair 19 of adjacent edges 18 is interconnected to each other by an auxiliary flap 30 which thereby interconnects adjacent side segments 32. Shown is a blank 3 in a preformed or folded state with essentially the shape of the finished composite product 2/ container. The auxiliary flaps 30 may be attached to a corresponding neighboring side segments 32 by means of an adhesive or by formfitting into an associated cutout in the corresponding neighboring side segment 32.

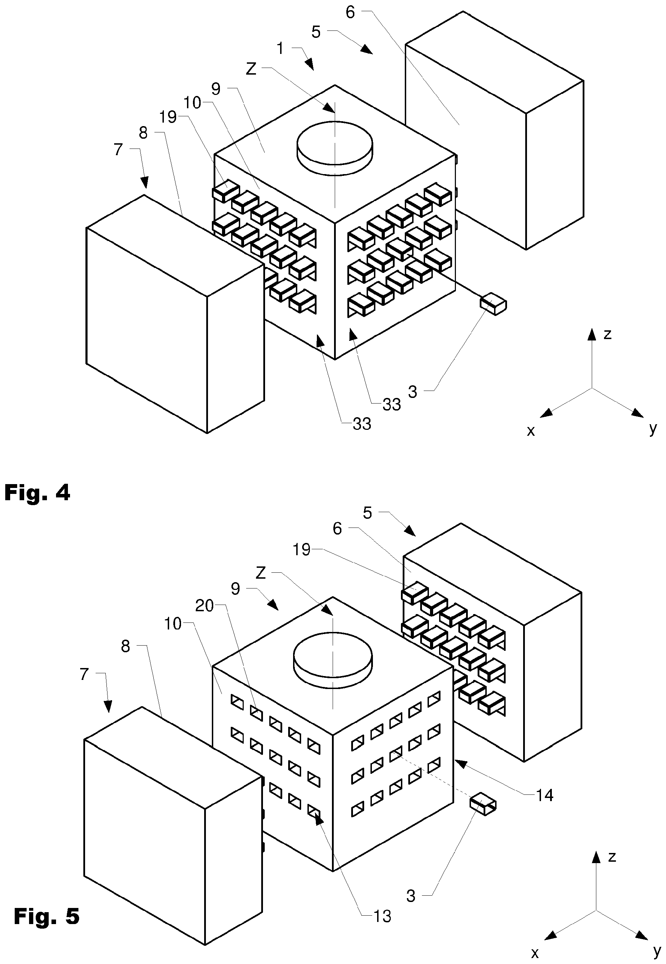

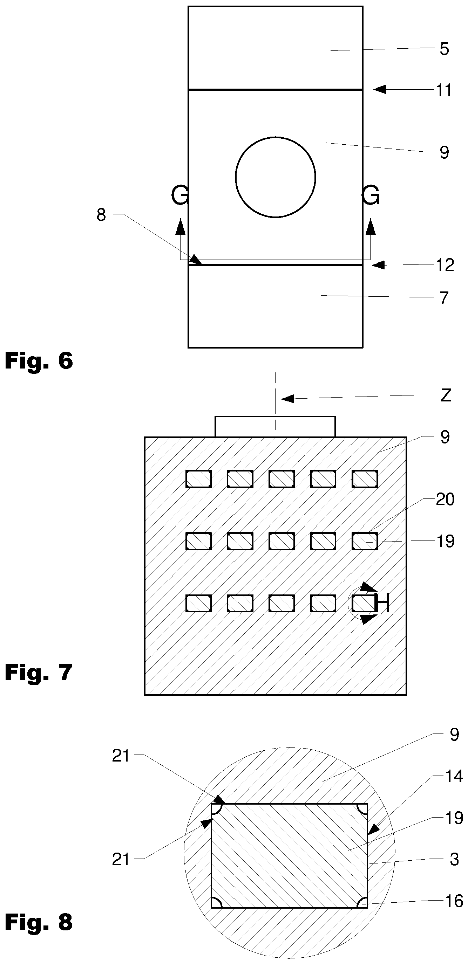

**Figure 4** and **Figure 5** are showing variations of the injection molding device 1 in a perspective view. A first outer mold half 5 having a first outer side face 6 and being arranged displaceable in a first direction X with respect to the first outer mold half 5 is a second outer mold half 7 having a second outer side face 8. The displacement allows a movement of the outer mold halves between an open position and a closed position. A center block 9 arranged, with respect to the first direction X, between the first outer mold half 5and the second outer mold half 7. The center may be rotated around a center axis Z perpendicular to the first direction X in an open position of the injection molding device 1. The center block comprises two pairs of side faces 10 each side face 10 carrying an inner mold half 33. In a closed position inner mold halves 33 interact with the outer mold halves 5 and 7 in a first and second separation plane 11, 12 respectively in order to form a first and a second cavity, as shown in **Figures 6-8****.** At least one of the first and the second cavity 13, 14 comprises clamping means to clamp a blank 3 in a closed position and forms a compartment in which liquefied plastic material is injected into in order to form a plastic component. The plastic component is interconnecting at least one pair of adjacent edges of the blank 3.

**Figure 4** further shows a convex core 19 arranged on a side face 10 of the center block 9 and a thereto operatively associated concave recess 20 is arranged on at least one outer mold half 5. In this variation of the invention a multiplicity of convex cores 19 is arranged on at least one side face 10 of the center block 9.

**Figure 5** further shows a concave recess 20 arranged on a side face 10 of the center block 9 and a thereto operatively associated concave recess 19 is arranged on at least one outer mold half 5. In this variation of the invention a multiplicity of concave recesses 20 is arranged on at least one side face 10 of the center block 9.

**Figure 6** shows the injection molding device of **Figure 5** in a closed position in a top view. Arranged between the outer mold halves 5 and 7 is the center block 9. The center block side faces facing the outer mold halves 5 and 7 are each carrying an inner mold half (not shown). These inner mold halves are interacting in a first separation plane 11 and in a second separation plane 12 with the respective outer mold halves 5 and 7 to form at least one first cavity and at least one second cavity. In this variation of the invention the inner mold halves are formed each by a multiplicity of concave recesses and the operatively associated outer mold halves 5 and 7 are each formed by a multiplicity of convex cores.

**Figure 7** shows a sectional view G of the injection molding device shown in **Figure 6****.** The sectional plane is parallel and next to the second separation plane 12 inside the center block 9. In this closed position the convex core 19 is inserted into the concave recess 20 forming a cavity having clamping means (not shown) to clamp at least one blank. When a blank is accommodated in the first and/ or the second cavity at least one compartment is formed in the first and/ or the second cavity.

**Figure 8** shows a detailed view H of the sectional view of **Figure 7** with a compartment 16 formed by the second cavity 14 and a blank 3. The second cavity being formed by a convex core 19 arranged on the second outer side face 8 inserted into a concave recess arranged on the side face of the center block 9 facing the second separation plane 12.

A typical process for the production of a composite product 2 comprising a combination of a blank 3 and an injection-molded plastic component 4 comprises the following process steps:
(a) When the injection molding device 1 is closed (see **Figure 6**) preformed blanks 3 are placed by a handling device (not shown) onto the inner mold halves 33 at a 0° position. The blanks are temporarily held by holding means (not shown) arranged on the inner mold half 33 carried by the respective side face 10 of the center block 9. These holding means can be formed by a roughened surface area as friction means or by holes connected to channels for air to hold the blanks by suction as suction means 23.
(b) Opening the injection molding device 1 (see **Figure 5**) by moving the first and the second outer mold half 5, 7 apart from each other, away from the center block 9 arranged there between in a center position.
(c) Rotating the center block 9 around the center axis Z in a counter clock direction by an angle of 90° to a 90° position.
(d) After closing of the injection molding device 1 the first and the second cavity 13, 14 are formed by concave recesses 20 and convex cores 19 and the blanks 3 are clamped by the circumferential protrusion 21 arranged on the convex core 19 and/ or the concave recess 20. The Protrusion 21 forms a cross sectional narrowing of the first and/ or second cavity 13, 14 which presses the blank 3 and delimits at least one compartment 16.
(e) Injection molding the at least one plastic component 4 forming a cage-like structure 25 by injection of liquefied plastic material into the at least one compartment 16 of the first and/ or the second cavity 13, 14.
(f) After sufficient curing of the plastic component 4, opening of the injection molding device 1 as described above and rotating the center block 9 by another 90° around the center axis to a 180° position or back to a 0° position. The composite products 2 comprising a combination of a blank 3 and an injection-molded plastic component 4 thereby remaining held by the holding means of the inner mold halves 33 of the center block 9.
   (g)The handling device (not shown), which is preferably arranged laterally to the injection molding device 1 next to the 180° and/ or 0° position, removes the finished composite products 2.

Rather, the words used in the specification are words of description rather than limitation, and it is understood that various changes may be made. The invention is set out in the appended set of claims.

### LIST OF DESIGNATIONS

| | | | |
|---|---|---|---|
| 1 | Injection molding device | 25 | Cage-like structure |
| 2 | Composite product | 26 | Lid |
| 3 | Blank | 27 | Film hinge |
| 4 | Injection-molded plastic component | 28 | Injection mark |
| 5 | First outer mold half | 30 | Auxiliary flap |
| 6 | First outer side face | 31 | Base segment of the blank |
| 7 | Second outer mold half | 32 | Side segment of the blank |
| 8 | Second outer side face | 33 | Inner mold half |
| 9 | Center block | X | First direction |
| 10 | Center block side face | Z | Center axis |
| 11 | First separation plane | | |
| 12 | Second separation plane | | |
| 13 | First cavity | | |
| 14 | Second cavity | | |
| 16 | Compartment | | |
| 17 | Edge of the blank | | |
| 18 | Pair of adjacent edges of the blank | | |
| 19 | Convex core | | |
| 20 | Concave recess | | |
| 21 | Protrusion | | |

## Claims

1. An injection molding device (1), for manufacturing of composite products (2) comprising a combination of a blank (3) and an injection-molded plastic component (4), the injection molding device (1) comprising:
a. a first outer mold half (5) comprising a first outer side face (6) and a second outer mold half (7) which is arranged displaceable with respect to the first outer mold half (5) in a first direction (x) between an open position and a closed position and comprising a second outer side face (8); and
b. a center block (9) arranged, with respect to the first direction (x), between the first and the second outer mold half (5, 7) and in the open position of the injection molding device (1) being rotatable around a center axis (Z) arranged perpendicular with respect to the first direction (x);
c. the center block (9) comprising at least one pair of center block side faces (10) each carrying an inner mold half (33) interacting in a closed position of the injection molding device (1) in a first separation plane (11) with the first outer mold half (5), respectively in a second separation plane (12) with the second outer mold half (7) forming in the closed position at least one first cavity (13) and at least one second cavity (14);
d. at least one of the first and/or the second cavity (13; 14) comprising at least one clamping means to clamp at least one blank (3), and in the closed position of the injection molding device (1) forming at least one compartment (16) to receive liquefied plastic material to form a plastic component (4) interconnecting to the blank (3) along at least one pair (18) of adjacent edges (17),
e. wherein in the closed position of the injection molding device (1) the at least one first cavity (13) and/or the least one second cavity (14) is formed by a convex core (19) and an operatively associated concave recess (20),
**characterized in that**
f. at least one concave recess (20) is arranged on a side face (10) of the center block (9) and a thereto operatively associated convex core (19) is arranged on a side face (6, 8) of at least one outer mold half (5, 7); or
g. at least one convex core (19) is arranged on a side face (10) of the center block (9) and a thereto operatively associated concave recess (20) is arranged on a side face (6, 8) of at least one outer mold half (5, 7).

2. The injection molding device (1) to claim 1, **wherein** the at least one clamping means in the closed position is formed between the convex core (19) and the concave recess (20) by at least one protrusion (21) arranged on the convex core (19) and/or the concave recess (20) in the closed position temporarily clamping the blank (3) between the convex core (19) and the concave recess (20).

3. The injection molding device (1) according to claim 2, **wherein** the at least one protrusion (21) is arranged circumferential on the convex core (19) and/or the concave recess (20) delimiting the at least one compartment (16) for the liquefied plastic material.

4. The injection molding device (1) according to at least one of the preceding claims, **wherein** the convex core (19) and/ or the concave recess (20) comprises holding means to temporarily hold the blank (3) at the thereto related side face (10) of center block (9) during rotation.

5. The injection molding device (1) according to claim 4, **wherein** the holding means are formed as a suction means and/or clamping means and/or friction means (24).

6. The injection molding device (1) according to at least one of the preceding claims, **wherein** the at least one compartment (16) has a cage-like structure (25) extending along the at least one pair (18) of adjacent edges (17) of the blank (3).

7. Method for manufacturing composite products (2) comprising a combination of a blank (3) and an injection-molded plastic component (4) comprising the steps:
a. Providing an injection molding device (1) comprising:
i. a first outer mold half (5) comprising a first outer side face (6) and a second outer mold half (7) which is arranged displaceable with respect to the first outer mold half (5) in a first direction (x) between an open position and a closed position and comprising a second outer side face (8); and
ii. a center block (9) arranged, with respect to the first direction (x), between the first and the second outer mold half (5, 7) and in the open position of the injection molding device (1) being rotatable around a center axis (Z) arranged perpendicular with respect to the first direction (x);
iii. the center block (9) comprising at least one pair of center block side faces (10) each carrying an inner mold half (33) interacting in a closed position of the injection molding device (1) in a first separation plane (11) with the first outer mold half (5), respectively in a second separation plane (12) with the second outer mold half (7) forming in the closed position at least one first cavity (13) and at least one second cavity (14);
iv. at least one of the first and/or the second cavity (13; 14)comprising at least one clamping means to clamp at least one blank (3), and in the closed position of the injection molding device (1) forming at least one compartment (16) to receive liquefied plastic material to form a plastic component (4) interconnecting to the blank (3) along at least one pair (18) of adjacent edges (17); and
v. in the closed position of the injection molding device (1) the at least one first cavity (13) and/or the least one second cavity (14) is formed by a convex core (19) and an operatively associated concave recess (20);
vi. wherein in the closed position of the injection molding device (1) the at least one first cavity (13) and/or the least one second cavity (14) is formed by a convex core (19) and an operatively associated concave recess (20), **characterized in that**
vii. at least one concave recess (20) is arranged on a side face (10) of the center block (9) and a thereto operatively associated convex core (19) is arranged on a side face (6, 8) of at least one outer mold half (5, 7); or
viii. at least one convex core (19) is arranged on a side face (10) of the center block (9) and a thereto operatively associated concave recess (20) is arranged on a side face (6, 8) of at least one outer mold half (5, 7);
b. loading a blank (3) onto the convex core (19) or into the concave recess (20).
c. rotating the center block (9) by 90°;
d. closing the injection molding device (1);
e. injecting liquefied plastic material into the at least one compartment (16);
f. opening the injection molding device (1);
g. rotating the center block (9) by 90°; and
h. removing the Composite product (2) comprising a combination of a blank (3) and an injection-molded plastic component (4).

8. Method for manufacturing composite products (2) according to claim 7, **wherein** the blank (3) is provided in a preformed or folded state, essentially in the shape of the composite product (2).

9. Method for manufacturing composite products (2) according to claim 8, **wherein** the preformed or folded state the blank (3) is prepared by interconnecting at least one pair (18) of adjacent edges (17) to each other by an auxiliary flap (30).

10. Method for manufacturing composite products (2) according to claim 7, **wherein** the blank (3) is folded into the folded state while it is loaded into the concave recess (20).

11. Method for manufacturing composite products (2) according to claim 10, **wherein** the blank (3) is pushed into the concave recess (20) by means of
a. the convex core (19); or
b. a folding device arranged laterally adjacent the injection molding device (1) and comprising a perpendicular to the first direction (x) displaceable folding means.

12. Method for manufacturing composite products (2) according to at least one of the claims 7-11, **wherein** in the closed position the blank (3) is temporarily clamped between the convex core (19) and the concave recess (20) by clamping means of the injection molding device (1), said clamping means being formed between the convex core (19) and the concave recess (20) by at least one protrusion (21) arranged on the convex core (19) and/or the concave recess (20) in the closed position.

13. Method for manufacturing composite products (2) according to at least one of the claims 7-12, **wherein** the blank (3) is temporarily held by holding means of the convex core (19) and/ or the concave recess (20) at the thereto related side face (10) of center block (9) during rotation.

14. Method for manufacturing composite products (2) according to at least one of the claims 7-13, **wherein** liquefied plastic material is injected by means of at least one sprue channel into the at least one compartment (16) of the first and /or the second cavity (13, 14) in order to form the injection-molded plastic component (4) of the composite product (2), leaving at least one injection mark (28) of a sprue channel.

15. Method for manufacturing composite products (2) according to at least one of the claims 7-14, **wherein** the at least one pair (18) of adjacent edges (17) of the blank (3) are at least partially embedded in plastic material during injection.

## Patentansprüche

1. Spritzgussvorrichtung (1) zur Herstellung von Verbundmaterialprodukten (2) umfassend eine Kombination aus einem Rohling (3) und einem spritzgegossenen Kunststoffteil (4), die Spritzgussvorrichtung (1) umfassend
a. eine erste äussere Formhälfte (5), die eine erste äussere Seitenfläche (6) und eine zweite äussere Formhälfte (7) umfasst, die in Bezug auf die erste äussere Formhälfte (5) in einer ersten Richtung (x) zwischen einer offenen Stellung und einer geschlossenen Stellung verschiebbar angeordnet ist und eine zweite äussere Seitenfläche (8) umfasst; und
b. einen Mittelblock (9), der in Bezug auf die erste Richtung (x) zwischen der ersten und der zweiten äusseren Formhälfte (5, 7) angeordnet ist und in der offenen Position der Spritzgussvorrichtung (1) um eine Mittelachse (Z) drehbar ist, die senkrecht in Bezug auf die erste Richtung (x) angeordnet ist;
c. der Mittelblock (9) mindestens ein Paar von Mittelblockseitenflächen (10) umfasst, die jeweils eine innere Formhälfte (33) tragen, die in einer geschlossenen Stellung der Spritzgussvorrichtung (1) in einer ersten Trennebene (11) mit der ersten äusseren Formhälfte (5) bzw. in einer zweiten Trennebene (12) mit der zweiten äusseren Formhälfte (7) zusammenwirken und in der geschlossenen Stellung mindestens einen ersten Hohlraum (13) und mindestens einen zweiten Hohlraum (14) bilden;
d. wobei mindestens einer der ersten und/oder zweiten Hohlräume (13; 14) mindestens eine Klemmeinrichtung umfasst, um mindestens einen Rohling (3) einzuklemmen, und in der geschlossenen Stellung der Spritzgussvorrichtung (1) mindestens ein Abteil (16) bildet, um verflüssigtes Kunststoffmaterial zu empfangen, um eine Kunststoffkomponente (4) zu bilden, die mit dem Rohling (3) entlang mindestens eines Paars (18) von angrenzenden Kanten (17) wirkverbunden ist,
e. wobei in der geschlossenen Stellung der Spritzgussvorrichtung (1) der mindestens eine erste Hohlraum (13) und/oder der mindestens eine zweite Hohlraum (14) durch einen konvexen Kern (19) und eine operativ abgebildete konkave Ausnehmung (20) gebildet wird,
**dadurch gekennzeichnet, dass**
f. mindestens eine konkave Ausnehmung (20) an einer Seitenfläche (10) des Mittelblocks (9) und ein diesem operativ zugeordneter konvexer Kern (19) an einer Seitenfläche (6, 8) mindestens einer äusseren Formhälfte (5, 7) angeordnet ist; oder
g. mindestens ein konvexer Kern (19) an einer Seitenfläche (10) des Mittelblocks (9) angeordnet ist und eine diesem operativ zugeordnete konkave Ausnehmung (20) an einer Seitenfläche (6, 8) mindestens einer äusseren Formhälfte (5, 7) angeordnet ist.

2. Die Spritzgussvorrichtung (1) gemäss Anspruch 1, wobei das mindestens eine Klemmmittel in der Schliessstellung durch mindestens einen an dem konvexen Kern (19) und/oder der konkaven Ausnehmung (20) angeordneten Vorsprung (21) gebildet wird, der den Rohling (3) in der geschlossenen Stellung vorübergehend zwischen dem konvexen Kern (19) und der konkaven Ausnehmung (20) einklemmt.

3. Die Spritzgussvorrichtung (1) gemäss Anspruch 2, wobei der mindestens eine Vorsprung (21) umlaufend an dem konvexen Kern (19) und/oder der konkaven Ausnehmung (20) angeordnet ist, die das mindestens ein Abteil (16) für das verflüssigte Kunststoffmaterial begrenzt.

4. Die Spritzgussvorrichtung (1) gemäss einem der vorangehenden Patentansprüche, wobei der konvexe Kern (19) und/oder die konkave Ausnehmung (20) Haltemittel umfasst, um den Rohling (3) während der Drehung vorübergehend an der dazugehörigen Seitenfläche (10) des Mittelblocks (9) zu halten.

5. Die Spritzgussvorrichtung (1) gemäss Anspruch 4, wobei die Haltemittel als Saugmittel und/oder Klemmmittel und/oder Reibmittel (24) ausgebildet sind.

6. Spritzgussvorrichtung (1) gemäss einem der vorangehenden Patentansprüche, wobei das mindestens ein Abteil (16) eine käfigartige Struktur (25) aufweist, die sich entlang des mindestens einen Paares (18) von angrenzenden Kanten (17) des Rohlings (3) erstreckt.

7. Verfahren zur Herstellung von Verbundmaterialprodukten (2), die eine Kombination aus einem Rohling (3) und einer spritzgegossenen Kunststoffkomponente (4) umfassen, mit den Schritten:
a. Bereitstellen einer Spritzgussvorrichtung (1) umfassend:
i. eine erste äussere Formhälfte (5), die eine erste äussere Seitenfläche (6) und eine zweite äussere Formhälfte (7) umfasst, die in Bezug auf die erste äussere Formhälfte (5) in einer ersten Richtung (x) zwischen einer offenen Stellung und einer geschlossenen Stellung verschiebbar angeordnet ist und eine zweite äussere Seitenfläche (8) umfasst; und
ii. einen Mittelblock (9), der in Bezug auf die erste Richtung (x) zwischen der ersten und der zweiten äusseren Formhälfte (5, 7) angeordnet ist und in der offenen Position der Spritzgussvorrichtung (1) um eine Mittelachse (Z) drehbar ist, die senkrecht in Bezug auf die erste Richtung (x) angeordnet ist;
iii. der Mittelblock (9) mindestens ein Paar von Mittelblockseitenflächen (10) umfasst, die jeweils eine innere Formhälfte (33) tragen, die in einer geschlossenen Stellung der Spritzgussvorrichtung (1) in einer ersten Trennebene (11) mit der ersten äusseren Formhälfte (5) bzw. in einer zweiten Trennebene (12) mit der zweiten äusseren Formhälfte (7) zusammenwirken und in der geschlossenen Stellung mindestens einen ersten Hohlraum (13) und mindestens einen zweiten Hohlraum (14) bilden;
iv. mindestens einer der ersten und/oder zweiten Hohlräume (13; 14) mindestens ein Klemmmittel umfasst, um mindestens einen Rohling (3) einzuklemmen, und in der geschlossenen Stellung der Spritzgussvorrichtung (1) mindestens ein Abteil (16) bildet, um verflüssigtes Kunststoffmaterial zu empfangen, um eine Kunststoffkomponente (4) zu bilden, die mit dem Rohling (3) entlang mindestens eines Paars (18) von angrenzenden Kanten (17) wirkverbunden ist; und
v. in der geschlossenen Stellung der Spritzgussvorrichtung (1) der mindestens eine erste Hohlraum (13) und/oder der mindestens eine zweite Hohlraum (14) durch einen konvexen Kern (19) und eine operativ abgebildete konkave Ausnehmung (20) gebildet wird;
vi. wobei in der geschlossenen Stellung der Spritzgussvorrichtung (1) der mindestens eine erste Hohlraum (13) und/oder der mindestens eine zweite Hohlraum (14) durch einen konvexen Kern (19) und eine operativ zugeordnete konkave Ausnehmung (20) gebildet wird, **dadurch gekennzeichnet, dass**
vii. mindestens eine konkave Ausnehmung (20) an einer Seitenfläche (10) des Mittelblocks (9) und ein diesem operativ zugeordneter konvexer Kern (19) an einer Seitenfläche (6, 8) mindestens einer äusseren Formhälfte (5, 7) angeordnet ist; oder
viii. mindestens ein konvexer Kern (19) an einer Seitenfläche (10) des Mittelblocks (9) angeordnet ist und eine diesem operativ zugeordnete konkave Ausnehmung (20) an einer Seitenfläche (6, 8) mindestens einer äusseren Formhälfte (5, 7) angeordnet ist.
b. Laden eines Rohlings (3) auf den konvexen Kern (19) oder in die konkave Ausnehmung (20).
c. Drehen des Mittelblocks (9) um 90°;
d. Schliessen der Spritzgussvorrichtung (1);
e. Einspritzen von verflüssigtem Kunststoffmaterial in das mindestens ein Abteil (16);
f. Öffnen der Spritzgussvorrichtung (1);
g. Drehen des Mittelblocks (9) um 90°; und
h. Herausnehmen des Verbundmaterialprodukts (2) umfassend eine Kombination aus einem Rohling (3) und einer spritzgegossenen Kunststoffkomponente (4).

8. Verfahren zur Herstellung von Verbundmaterialprodukten (2) gemäss Anspruch 7, wobei der Rohling (3) in einem vorgeformten oder gefalteten Zustand, im Wesentlichen in der Form des Verbundmaterialprodukts (2), bereitgestellt wird.

9. Verfahren zur Herstellung von Verbundmaterialprodukten (2) gemäss Anspruch 8, wobei der Rohling (3) im vorgeformten oder gefalteten Zustand durch wirkverbundene Verbindung von mindestens einem Paar (18) angrenzender Kanten (17) durch eine Hilfslasche (30) hergestellt wird.

10. Verfahren zur Herstellung von Verbundmaterialprodukten (2) gemäss Anspruch 7, wobei der Rohling (3) in den gefalteten Zustand gefaltet wird, während er in die konkave Ausnehmung (20) eingelegt wird.

11. Verfahren zur Herstellung von Verbundmaterialprodukten (2) gemäss Anspruch 10, bei dem der Rohling (3) in die konkave Ausnehmung (20) geschoben wird, mittels
a. dem konvexen Kern (19); oder
b. einer seitlich angrenzend an die Spritzgussvorrichtung (1) angeordneten Faltvorrichtung, die ein senkrecht zur ersten Richtung (x) verschiebbares Faltmittel umfasst.

12. Verfahren zur Herstellung von Verbundmaterialprodukten (2) gemäss einem der Ansprüche 7-11, wobei der Rohling (3) in der geschlossenen Stellung durch Klemmmittel der Spritzgussvorrichtung (1) vorübergehend zwischen dem konvexen Kern (19) und der konkaven Ausnehmung (20) eingeklemmt wird, wobei die Klemmmittel durch mindestens einen in der geschlossenen Stellung am konvexen Kern (19) und/oder der konkaven Ausnehmung (20) angeordneten Vorsprung (21) zwischen dem konvexen Kern (19) und der konkaven Ausnehmung (20) gebildet werden.

13. Verfahren zur Herstellung von Verbundmaterialprodukten (2) gemäss einem der Ansprüche 7-12, wobei der Rohling (3) durch Haltemittel des konvexen Kerns (19) und/oder der konkaven Ausnehmung (20) an der dazugehörigen Seitenfläche (10) des Mittelblocks (9) während der Rotation temporär gehalten wird.

14. Verfahren zur Herstellung von Verbundmaterialprodukten (2) gemäss einem der Ansprüche 7-13, wobei **verflüssigtes** Kunststoffmaterial mittels mindestens eines Angusskanals in das mindestens ein Abteil (16) des ersten und/oder zweiten Hohlraums (13, 14) eingespritzt wird, um die spritzgegossene Kunststoffkomponente (4) des Verbundmaterialprodukts (2) zu bilden, wobei mindestens eine Einspritzmarke (28) eines Angusskanals hinterlassen wird.

15. Verfahren zur Herstellung von Verbundmaterialprodukten (2) gemäss einem der Ansprüche 7-14, wobei das mindestens eine Paar (18) angrenzender Kanten (17) des Rohlings (3) beim Spritzgiessen zumindest teilweise in Kunststoffmaterial eingebettet wird.

## Revendications

1. Dispositif de moulage par injection (1), pour la fabrication de produits composites (2) comprenant une combinaison d'une ébauche (3) et d'un composant en plastique moulé par injection (4), le dispositif de moulage par injection (1) comprenant :
a. un premier demi-moule extérieur (5) comprenant une première face latérale extérieure (6) et un second demi-moule extérieur (7) qui est arrangé pour être déplacé par rapport au premier demi-moule extérieur (5) dans une première direction (x) entre une position ouverte et une position fermée et comprenant une seconde face latérale extérieure (8) ; et
b. un bloc central (9) arrangé, par rapport à la première direction (x), entre le premier et le second demi-moule extérieur (5, 7) et dans la position ouverte du dispositif moulage par injection (1) étant rotatif autour d'un axe central (Z) arrangé perpendiculairement par rapport à la première direction (x) ;
c. le bloc central (9) comprend au moins une paire de faces latérales (10) de bloc central portant chacune un demi-moule intérieur (33) interagissant en position fermée du dispositif de moulage par injection (1) dans un premier plan de séparation (11) avec le premier demi-moule extérieur (5), respectivement dans un second plan de séparation (12) avec le second demi-moule extérieur (7) formant en position fermée au moins une première cavité (13) et au moins une seconde cavité (14) ;
d. au moins l'une de la première et/ou de la seconde cavité (13 ; 14) comprend au moins un moyen de serrage pour serrer au moins une ébauche (3), et en position fermée du dispositif de moulage par injection (1) formant au moins un compartiment (16) pour recevoir de la matière plastique liquéfiée pour former un composant en plastique (4) interconnecté à l'ébauche (3) le long d'au moins une paire (18) de bords adjacents (17),
e. dans laquelle, en position fermée du dispositif de moulage par injection (1), la au moins une première cavité (13) et/ou la au moins une seconde cavité (14) est formée d'un noyau convexe (19) et d'un renfoncement concave (20) associé de manière opérationnelle, **caractérisée en ce que**
f. au moins un renfoncement concave (20) est arrangée sur une face latérale (10) du bloc central (9) et un noyau convexe (19) qui lui est associé est arrangé sur une face latérale (6, 8) d'au moins un demi-moule extérieur (5, 7) ; ou
g. au moins un noyau convexe (19) est arrangé sur une face latérale (10) du bloc central (9) et un renfoncement concave (20) associé à celui-ci est arrangé sur une face latérale (6, 8) d'au moins un demi-moule extérieur (5, 7).

2. Dispositif moulage de par injection (1) selon la revendication 1, dans lequel le au moins un moyen de serrage en position fermée est formé entre le noyau convexe (19) et le renfoncement concave (20) par au moins une protubérance (21) arrangée sur le noyau convexe (19) et/ou le renfoncement concave (20) en position fermée serrant temporairement l'ébauche (3) entre le noyau convexe (19) et le renfoncement concave (20).

3. Dispositif moulage par injection (1) selon la revendication 2, dans lequel la au moins une protubérance (21) est arrangée circonférentiellement sur le noyau convexe (19) et/ou le renfoncement concave (20) délimitant l'au moins un compartiment (16) pour la matière plastique liquéfiée.

4. Dispositif de moulage par injection (1) selon l'une des revendications précédentes, dans lequel le noyau convexe (19) et/ou la renfoncement concave (20) comprend des moyens de maintien pour maintenir temporairement l'ébauche (3) sur la face latérale (10) du bloc central (9) qui lui est liée pendant la rotation.

5. Dispositif de moulage par injection (1) selon la revendication 4, dans lequel les moyens de maintien sont formés comme un moyen d'aspiration et/ou un moyen de serrage et/ou un moyen de friction (24).

6. Dispositif de moulage par injection (1) selon l'une des revendications précédentes, dans lequel le au moins un compartiment (16) présente une structure en forme de cage (25) s'étendant le long de la au moins une paire (18) de bords adjacents (17) de l'ébauche (3).

7. Procédé de fabrication de produits composites (2) comprenant une combinaison d'une ébauche (3) et d'un composant en plastique moulé par injection (4) comprenant les étapes suivantes:
a. Fournir un dispositif de moulage par injection (1) comprenant :
i. un premier demi-moule extérieur (5) comprenant une première face latérale extérieure (6) et un second demi-moule extérieur (7) qui est arrangé pour être déplacé par rapport au premier demi-moule extérieur (5) dans une première direction (x) entre une position ouverte et une position fermée et comprenant une seconde face latérale extérieure (8) ; et
ii. un bloc central (9) arrangé, par rapport à la première direction (x), entre le premier et le second demi-moule extérieur (5, 7) et dans la position ouverte du dispositif moulage par injection (1) étant rotatif autour d'un axe central (Z) arrangé perpendiculairement par rapport à la première direction (x) ;
iii. le bloc central (9) comprend au moins une paire de faces latérales (10) de bloc central portant chacune un demi-moule intérieur (33) interagissant en position fermée du dispositif de moulage par injection (1) dans un premier plan de séparation (11) avec le premier demi-moule extérieur (5), respectivement dans un second plan de séparation (12) avec le second demi-moule extérieur (7) formant en position fermée au moins une première cavité (13) et au moins une seconde cavité (14) ;
iv. au moins l'une de la première et/ou de la deuxième cavité (13 ; 14) comprend au moins un moyen de serrage pour serrer au moins une ébauche (3), et en position fermée du dispositif de moulage par injection (1) formant au moins un compartiment (16) pour recevoir de la matière plastique liquéfiée pour former un composant en plastique (4) interconnecté à l'ébauche (3) le long d'au moins une paire (18) de bords adjacents (17) ; et
v. dans la position fermée du dispositif de moulage par injection (1), la au moins une première cavité (13) et/ou la au moins une deuxième cavité (14) est formée par un noyau convexe (19) et un renfoncement concave (20) associé de manière opérationnelle ;
vi. dans laquelle, en position fermée du dispositif de moulage par injection (1), la au moins une première cavité (13) et/ou la au moins une seconde cavité (14) est formée par un noyau convexe (19) et un renfoncement concave (20) associé de manière opérationnelle, **caractérisée en ce que**
vii. au moins un renfoncement concave (20) est arrangée sur une face latérale (10) du bloc central (9) et un noyau convexe (19) qui lui est associé est arrangé sur une face latérale (6, 8) d'au moins un demi-moule extérieur (5, 7) ; ou
viii. au moins un noyau convexe (19) est arrangé sur une face latérale (10) du bloc central (9) et un renfoncement concave (20) associé à celui-ci est arrangé sur une face latérale (6, 8) d'au moins un demi-moule extérieur (5, 7).
b. charger une ébauche (3) sur le noyau convexe (19) ou dans la renfoncement concave (20).
c. tourner le bloc central (9) de 90° ;
d. fermer le dispositif de moulage par injection (1);
e. injecter de la matière plastique liquéfiée dans le compartiment (16) au moins ;
f. ouverture du dispositif de moulage par injection (1) ;
g. faire tourner le bloc central (9) de 90° ; et
h. retirer le produit composite (2) comprenant une combinaison d'une ébauche (3) et d'un composant en plastique moulé par injection (4).

8. Procédé de fabrication de produits composites (2) selon la revendication 7, dans lequel l'ébauche (3) est fournie à l'état préformé ou plié, essentiellement dans la forme du produit composite (2).

9. Procédé de fabrication de produits composites (2) selon la revendication 8, dans lequel l'état préformé ou plié l'ébauche (3) est préparé en interconnectant au moins une paire (18) de bords adjacents (17) l'un à l'autre par un rabat auxiliaire (30).

10. Procédé de fabrication de produits composites (2) selon la revendication 7, dans lequel l'ébauche (3) est pliée à l'état plié pendant qu'elle est chargée dans la renfoncement concave (20).

11. Procédé de fabrication de produits composites (2) selon la revendication 10, dans lequel l'ébauche (3) est poussée dans le renfoncement concave (20) au moyen de
a. du noyau convexe (19) ; ou
b. d'un dispositif de pliage arrangé latéralement à côté du dispositif moulage par injection (1) et comprenant un moyen de pliage déplaçable perpendiculairement à la première direction (x).

12. Procédé de fabrication de produits composites (2) selon l'une des revendications 7 à 11, dans lequel, en position fermée, l'ébauche (3) est temporairement serrée entre le noyau convexe (19) et la renfoncement concave (20) par des moyens de serrage du dispositif de moulage par injection (1), lesdits moyens de serrage étant formés entre le noyau convexe (19) et la renfoncement concave (20) par au moins une protubérance (21) arrangée sur le noyau convexe (19) et/ou la renfoncement concave (20) en position fermée.

13. Procédé de fabrication de produits composites (2) selon l'une des revendications 7 à 12, dans lequel l'ébauche (3) est temporairement maintenue par des moyens de maintien du noyau convexe (19) et/ou du renfoncement concave (20) sur la face latérale (10) du bloc central (9) qui lui est liée, pendant la rotation.

14. Procédé de fabrication de produits composites (2) selon l'une des revendications 7 à 13, dans lequel une matière plastique liquéfiée est injectée au moyen d'au moins un canal de coulée dans au moins un compartiment (16) de la première et/ou de la deuxième cavité (13, 14) afin de former le composant en plastique moulé par injection (4) du produit composite (2), en laissant au moins une marque d'injection (28) d'un canal de coulée.

15. Procédé de fabrication de produits composites (2) selon l'une des revendications 7 à 14, dans lequel l'au moins une paire (18) de bords adjacents (17) de l'ébauche (3) est au moins partiellement noyée dans la matière plastique lors de l'injection.
